# EUROPÄISCHE PATENTSCHRIFT

(11) **EP 0 387 581 B1**
(45) Veröffentlichungstag und Bekanntmachung des Hinweises auf die Patenterteilung: **20.04.1994**
(21) Anmeldenummer: 90103672.3
(22) Anmeldetag: 26.02.1990
(51) Int. Cl.: B60R 25/00

(54) **Anlage zur Sicherung von Fahrzeugen vor Diebstahl**
Arrangement for protecting vehicles against theft
Installation pour protéger les véhicules contre le vol

(30) Priorität: 11.03.1989 DE 3908029; 02.06.1989 DE 3918052
(43) Veröffentlichungstag der Anmeldung: 19.09.1990
(73) Patentinhaber: Blaupunkt-Werke GmbH, 31132 Hildesheim (DE)
(72) Erfinder: Kässer, Jürgen, Dr., D-3201 Diekholzen (DE)

(56) Entgegenhaltungen:
- EP-A- 0 242 099
- FR-A- 2 541 801
- FR-A- 2 587 664
- FR-A- 2 619 944
- GB-A- 2 051 442

## Beschreibung

Die Erfindung betrifft eine Anlage zur Sicherung von Fahrzeugen oder von in den Fahrzeugen eingebauten Komponenten vor Diebstahl.

Bekannte Anlagen dieser Art zur Sicherung von Komponenten arbeiten mit der Eingabe eines Codewortes in einen komponenteneigenen Mikroprozessor (siehe DE-A-36 06 737 C1), wobei dieser Mikroprozessor auch an eine eigene Spannungsversorgung angeschlossen sein kann, um die Trennung der Komponenten vom Bordnetz überwachen zu können (siehe SE-A-449 274).

Aus der EP-A-0242009 ist eine Anlage bekannt, bei der der unberechtigte Zugang oder die unberechtigte Inbetriebnahme des Fahrzeuges überwacht wird. Bei deren Eintreten werden Signale über Funk an eine Zentrale gegeben, von der aus dann Verriegelungsbefehle an die betriebswesentlichen Komponenten des Fahrzeuges gegeben werden können.

Der Erfindung lag die Aufgabe zugrunde, bereits die unberechtigte Inbetriebnahme des Fahrzeuges zu erschweren und damit die Möglichkeiten der Fahrzeugsicherung zu vermehren.

Diese Aufgabe wird durch eine Anlage gemäß den Merkmalen der Patentansprüche 1 oder 2 gelöst.

Weitere Ausgestaltungen der Erfindung, insbesondere zum Schutz vor Mißbrauch, sind Gegenstände der Unteransprüche.

Anhand der Zeichnung sind zwei Ausführungsbeispiele der erfindungsgemäßen Anlage erläutert.

Figur 1 zeigt ein Blockschaltbild der Anlage.

Figur 2 eine Weiterentwicklung der Anlage nach Figur 1

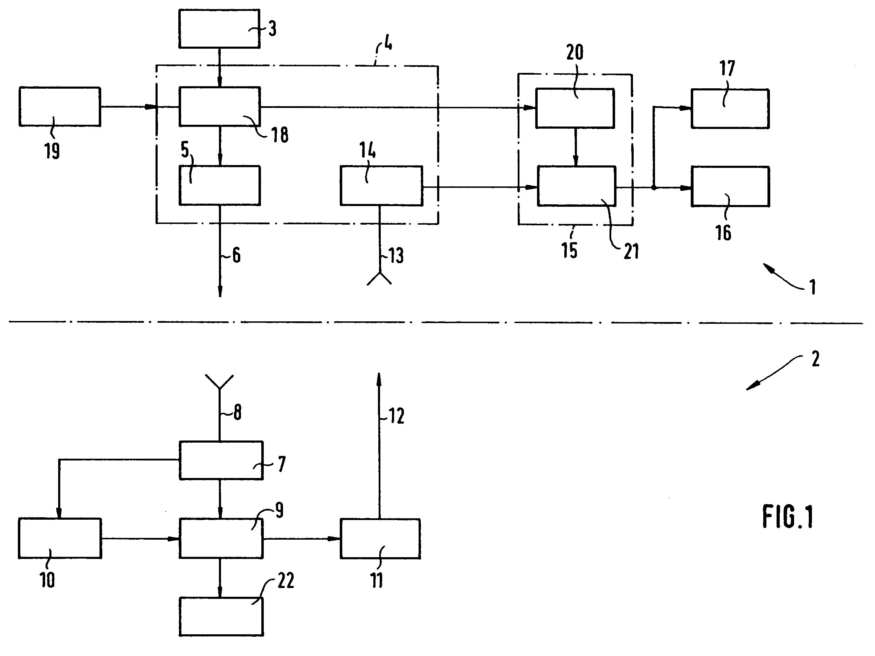

Die in Figur 1 dargestellte Anlage besteht aus einer in dem zu schützenden Fahrzeug eingebauten Baugruppe 1 und einer außerhalb des Fahrzeuges z. B. in einer Polizeiwache installierten Zentrale 2, die beide über Sende- und Empfangsantennen miteinander koppelbar sind.

Die fahrzeugseitige Baugruppe 1 umfaßt eine Eingabeeinheit 3 für ein Codewort. Dieses Codewort kann über Tasten eingegeben werden oder mittels eines Datenträgerlesers. Die Eingabeeinheit 3 ist an eine Datenübermittlungsstation 4 angeschlossen, die bei einer Codeeingabe von der Eingabeeinheit 3 eingeschaltet wird, sofern die Datenübermittlungsstation nicht aufgrund anderer Nutzungen der Station bereits eingeschaltet ist. Die Datenübermittlungsstation 4 umfaßt unter anderem einen Sender 5, an dem eine Sendeantenne 6 angeschlossen ist.

Die Zentrale umfaßt einen Zentralempfänger 7, der an eine Empfangsantenne 8 angeschlossen ist, eine Prüfstation 9, die mit einem Code-Speicher 10 verbunden ist und einen Zentralsender 11 für einen Freigabebefehl an die Datenübermittlungsstation. Der Zentralsender 11 ist über eine Sendeantenne 12 in der Zentrale und eine Empfangsantenne 13 am Fahrzeug mit der Datenübermittlungsstation 4 im Fahrzeug koppelbar.

Zum Empfang des Freigabebefehls dient ein in dem zu schützenden Fahrzeug eingebauter, an die Empfangsantenne 13 angeschlossener Empfänger 14 in dem Datenübermittlungsgerät 4. Der Empfängerausgang ist mit einer Entriegelungsstufe 15 für den Anlasser 16 des Kraftfahrzeugmotors oder für einen Einschalter 17 für die zu schützende Komponente des Kraftfahrzeuges verbunden.

In dem Ausführungsbeispiel gemäß Figur 1 ist innerhalb der Datenübermittlungsstation ein Telegrammschreiber 18 als Eingangsstufe vorgesehen. Dieser Telegrammschreiber 18 ist einerseits mit der Eingabeeinheit 3 verbunden, andererseits an den Ausgang eines Ortungsgerätes 19 angeschlossen. Einer der Ausgänge des Telegrammschreibers ist mit dem Eingang des Senders 5 und ein zweiter Ausgang mit dem Eingang eines Zwischenspeichers 20 in der Entriegelungsstufe 15 verbunden. Der Speicherausgang ist auf einen ersten Eingang eines Rechners 21 in der Entriegelungsstufe 15 geführt. An einen zweiten Eingang des Rechners 21 ist der Ausgang des Empfängers 14 angeschlossen. Der Ausgang des Rechners 21 liefert den Befehl für die Freigabe des Anlassers.

In einer besonderen Ausgestaltung des Telegrammschreibers fügt dieser dem eingegebenen Code automatisch das Kraftfahrzeugkennzeichen hinzu, das in einem Speicher des Telegrammschreibers abgelegt ist.

In einer abgewandelten Ausführungsform der Baugruppe 1 ist an den Rechner 21 eingangsseitig noch ein Zeitdatengeber 25 angeschlossen.

In der Zentrale ist ferner an die Prüfstation 9 ein Display 22 angeschlossen. Auf diesem Display lassen sich einige der mit dem Telegramm übermittelten Informationen, z. B. die am Ortungsgerät 19 abnehmbaren Informationen über den Standort des Fahrzeuges, darstellen.

In einer Weiterbildung der Zentrale 2 ist zwischen der Prüfstation 9 und dem Zentralsender 11 ein Rechner 23 zwischengeschaltet, an dessen zweiten Eingang ein Zeitdatengeber 24 angeschlossen ist.

Die mit ihren wesentlichen Funktionsblöcken in Figur 1 dargestellte Anlage arbeitet in folgender Weise.

Der berechtigte Fahrer des zu schützenden Fahrzeuges oder der berechtigte Benutzer der zu schützenden Komponente, z. B. eines Autotelefons, gibt den erforderlichen Code über Tastenbedienung oder Datenträgerleser in die Eingabeeinheit 3 ein. Der Telegrammschreiber 18 nimmt diese Informationen auf und verbindet sie mit der am Ausgang des Ortungsgerätes 19 abnehmbaren Informationen über den Standort des Fahrzeuges. Das an den Sender 5 in dem Datenübermittlungsgerät 4 weitergegebene und vom Sender ausgestrahlte Telegramm besteht somit aus dem eingegebenen Codewort und der Standortinformation des Fahrzeuges. Gegebenenfalls kann das eingegebene Codewort in dem Telegrammschreiber in eine andere Informationsfolge umgesetzt werden, die auch das Fahrzeugkennzeichen umfaßt.

Das ausgesandte Telegramm gelangt über die Kopplung zwischen der Sendeantenne 6 und der Empfangsantenne 8 in den Zentralempfänger 7 und weiter in die an diesen angeschlossene Prüfstation 9.

Arbeitet der fahrzeugseitige Sender auf einer fest vorgegebenen Sendefrequenz, die sich von der Sendefrequenz anderer fahrzeugseitigen Sender unterscheidet, so stehen, sobald der berechtigte Fahrer das richtige Codewort eingegeben hat, in der Zentrale zwei Informationen über das Fahrzeug, nämlich das Codewort und die Information über die Abstimmung des Tuners, also über die Sendefrequenz des fahrzeugseitigen Senders zur Verfügung. Nur wenn beide Informationen gleichzeitig richtig sind, kann die Prüfstation den Freigabebefehl an den Zentralsender geben.

Zweckmäßigerweise wird das gesamte Spektrum der einzelnen den von der Zentrale zu überwachenden Fahrzeugen zugeordneten Frequenzen mit einem Sendersuchlauf-Tuner danach abgesucht, ob auf einer dieser Frequenzen vom fahrzeugseitigen Sender 5 ein Telegramm abgegeben wird. Dazu bedarf es in der Regel der mehrfachen Wiederholung des Telegramms seitens des Senders 5.

Der an die Prüfstation 9 angeschlossene Code-Speicher 10 ist nun so organisiert, daß beim Sendersuchlauf des Tuners nicht nur eine bestimmte Senderfrequenz aufgesucht wird, sondern zugleich auch eine der jeweiligen Senderfrequenz zugeordnete Speicherzelle im Speicher 10 aufgerufen wird. Hat der Sendersuchlauf die Aussendung eines Telegramms auf einer bestimmten Senderfrequenz festgestellt, dann wird das in der zugeordneten Speicherzelle gespeicherte Codewort an die Prüfstation abgegeben und mit dem Inhalt des Telegramms verglichen, welches der Zentralempfänger 7 an die Prüfstation weitergeleitet hat.

Stimmen beide überein, so wird der Freigabebefehl vom Zentralsender 11 ausgestrahlt.

Fehlt die Übereinstimmung, so wird die Information über den Fahrzeugstandort und das gegebenenfalls im Telegramm enthaltene Fahrzeugkennzeichen auf dem Display 22 angezeigt. Diese Information kann an die Polizei weitergeleitet werden, da zu vermuten ist, daß ein Unberechtigter sich an dem Fahrzeug zu schaffen macht.

Arbeiten alle fahrzeugseitigen Sender auf derselben Frequenz, so ist der Codespeicher 10 so organisiert, daß jedem Fahrzeugkennzeichen der überwachten Fahrzeuge eine Speicherzelle zugeordnet ist, in welcher das zugehörige Codewort abgelegt ist. In dem Zentralempfänger ist ein Kennzeichensuchlauf-Decoder vorgesehen, der ständig überwacht, welche der Kraftfahrzeugkennzeichen in den empfangenen Telegrammen enthalten sind. Diese werden vom Zentralempfänger 7 an den Codespeicher 10 übermittelt und aus der zugeordneten Speicherzelle der Code ausgelesen und in die Prüfstation 9 eingegeben. Dort wird der aus dem Speicher 10 ausgelesene Code mit dem im Telegramm empfangenen Code verglichen. Stimmen beide überein, so wird ein Freigabebefehl in der Prüfstation 9 erzeugt.

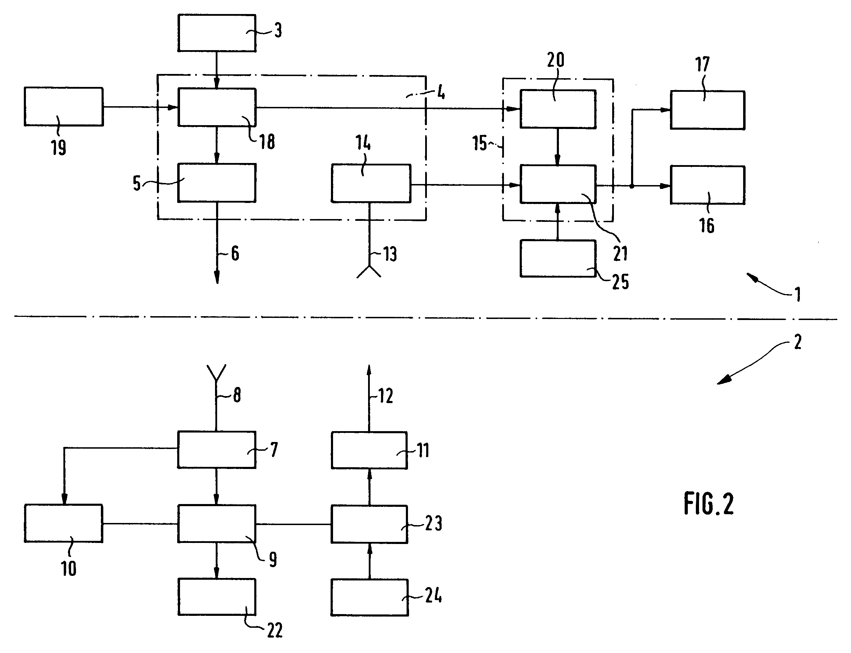

In dem gemäß der Figur 2 vorgesehenen Rechner 23 wird aus dem von der Prüfstation 9 ermittelten, gegebenenfalls fahrzeugspezifischen Freigabebefehl und aus dem von einem ersten Zeitdatengeber 24 gelieferte Datum ein zeitlich modifizierter Freigabebefehl errechnet. Dieser Freigabebefehl wird in den Zentralsender 11 eingespeist.

Der übertragene Freigabebefehl wird vom fahrzeugseitigen Empfänger 14 aufgenommen. Der Empfänger ist dazu fest auf die Sendefrequenz des Zentralsenders abgestimmt.

Im Fahrzeug ermittelt der Rechner 21 in der Entriegelungsstufe 15, aus dem in dem Zwischenspeicher 20 abgelegten Telegramm und im Ausführungsbeispiel gemäß Figur 2 aus der Zeitangabe, die ein zweiter Zeitdatengeber 25 zur Verfügung stellt, beim Einschalten des Anlassers oder der Fahrzeugkomponente ein zeitlich veränderliches Schlüsselwort. Sobald der Freigabebefehl eingetroffen ist und der Rechner 21 diesen durch Vergleich mit dem Schlüsselwort als den zu erwartenden Freigabebefehl ernennt, wird der Anlasser oder die Fahrzeugkomponente vom Rechner 21 freigegeben.

Um eine sichere Arbeitsweise der Anlage zu gewährleisten, ist es zweckmäßig, sowohl im Fahrzeug als auch in der Zentrale eine sogenannte Funkuhr als Zeitdatengeber zu verwenden. Damit ist der synchrone Lauf beider Uhren sichergestellt.

Ist an den Telegrammgeber 18 ein Ortungsgerät 19 angeschlossen, so kann die Ortsangabe in dem Telegrammschreiber sowohl bei der Bildung des Schlüsselwortes berücksichtigt werden als auch in dem Telegramm in "Klarschrift" an die Zentrale weitergeleitet werden, wo die Ortsangabe in der Prüfstation nicht nur zur Anzeige auf dem Display, sondern auch bei der Bildung des ersten Freigabebefehls Berücksichtigung finden kann. Das im Zwischenspeicher 20 abgelegte Schlüsselwort für einen solchen Freigabebefehl muß dann dieselbe Information über den Fahrzeugstandort enthalten.

Mit jeder so arbeitenden Anlage kann die der Erfindung zugrundeliegende Aufgabe, das Fahrzeug oder eine seiner Komponenten vor Diebstahl zu schützen, wirksam gelöst werden.

Daneben sind andere Ausführungsbeispiele denkbar, die ohne Ortungsgerät und Display für die Standortinformation arbeiten und solche, die den empfangenen Freigabebefehl direkt an den Anlasser weitergeben.

### Legende der Bezugsziffern

- 1.: Fahrzeugseitige Baugruppe
- 2.: Zentrale
- 3.: Eingabeeinheit
- 4.: Datenübermittlungsstation
- 5.: Sender
- 6.: Sendeantenne
- 7.: Zentralempfänger
- 8.: Empfangsantenne
- 9.: Prüfstation
- 10.: Codespeicher
- 11.: Zentralsender
- 12.: Sendeantenne
- 13.: Empfangsantenne
- 14.: Empfänger
- 15.: Entriegelungsstufe
- 16.: Anlasser
- 17.: Einschalter
- 18.: Telegrammschreiber
- 19.: Ortungsgerät
- 20.: Zwischenspeicher
- 21.: Rechner
- 22.: Display
- 23.: Rechner
- 24./25.: Zeitdatengeber, Funkuhr

## Patentansprüche

1. Anlage zur Sicherung von Fahrzeugen oder in Fahrzeugen eingebauten Komponenten mit einer Eingabeeinheit (3) für Codewörter, mit einer von der Eingabeeinheit einschaltbaren Datenübermittlungsstation (4), die einen auf einer vorgegebenen Frequenz sendenden Sender (5) umfaßt, und mit einem fahrzeugseitigen Empfänger (14) für Freigabe befehle, der mit einer Entriegelungsschaltung (15) für den Anlasser (16) des Fahrzeuges oder des Einschalters (17) der Komponenten verbunden ist,
dadurch gekennzeichnet,
daß der Sender das eingegebene Codewort mit einer fest vorgegebenen, sich von der Sendefrequenz der Sender anderer Fahrzeuge unterscheidenden Frequenz sendet und das gesendete Codewort mit einem auf alle Fahrzeugsender abstimmbaren Zentralempfänger (7) in einer außerhalb des Fahrzeuges installierten, nicht fahrzeuggebundenen Zentrale (2) empfangbar ist, daß die Zentrale eine Prüfstation (9) umfaßt, in der das vom Fahrzeug empfangene Codewort mit einem Codewort verglichen wird, welches in einem Codespeicher (10) bei Empfang der Frequenz dieser zugeordnet aufrufbar ist, und daß die Prüfstation bei Übereinstimmung der Codeworte einen Entriegelungsbefehl an einen Zentralsender (11) in der Zentrale zur Übermittlung an den fahrzeugseitigen, auf den Zentralsender abgestimmten Empfänger für Freigabe befehle abgibt.

2. Anlage zur Sicherung von Fahrzeugen oder in Fahrzeugen eingebauten Komponenten mit einer Eingabeeinheit (3) für Codewörter, mit einer von der Eingabeeinheit einschaltbaren Datenübermittlungsstation (4), die einen auf einer vorgegebenen Frequenz sendenden Sender (5) umfaßt und mit einem fahrzeugseitigen Empfänger (14) für Freigabebefehle, der mit einer Entriegelungsschaltung (15) für den Anlasser (16) des Fahrzeuges oder des Einschalters (17) der Komponenten verbunden ist,
dadurch gekennzeichnet,
daß der Sender das eingegebene Codewort zusammen mit dem Fahrzeugkennzeichen auf einer fest vorgegebenen, für alle Fahrzeuge gleichen Frequenz sendet und und das zusammen mit dem Codewort gesendete Fahrzeugkennzeichen mit einem Zentralempfänger (7) in einer außerhalb des Fahrzeuges installierten, nicht fahrzeuggebundenen Zentrale (2) empfangbar ist, und daß die Zentrale eine Prüfstation (9) umfaßt, in der das mit dem Fahrzeugkennzeichen empfangene Codewort mit einem Codewort verglichen wird, welches in einem Codespeicher bei Empfang des Fahrzeugkennzeichens diesem zugeordnet aufrufbar ist und daß die Prüfstation bei Übereinstimmung der Codeworte einen Entriegelungsbefehl an einen Zentralsender (11) in der Zentrale zur Übermittlung an den fahrzeugseitigen, auf den Zentralsender abgestimmten Empfänger für Freigabe befehle abgibt.

3. Anlage nach Anspruch 1 oder 2,
gekennzeichnet
durch ein mit der Eingabeeinheit (3) gekoppeltes Ortungsgerät (19), dessen Ortsangabe dem Codewort automatisch zufügbar ist, und durch ein von der Prüfstation (9) gesteuertes Display (22) für die Ortsangabe in der Zentrale.

4. Anlage nach Anpruch 1, 2 oder 3,
gekennzeichnet
durch einen an die Eingabeeinheit angeschlossenen Zwischenspeicher (20) für ein Codewort und durch einen Rechner (21) in der Entriegelungsschaltung (15), der mit dem Ausgang des Zwischenspeichers (20) und dem Ausgang des fahrzeugseitigen Empfängers (14) verbunden ist.

5. Anlage nach einem der vorhergehenden Ansprüche 1 bis 4,
gekennzeichnet
durch einen ersten Zeitdatengeber (24) und einem mit diesem verbundenen Rechner (23) zur Modifizierung des Freigabebefehls vor seiner Eingabe in den Zentralsender (11) und durch einen mit dem Rechner (21) in der Entriegelungseinheit (15) verbundenen Zeitdatengeber (25) zur Modifizierung des Inhaltes des Speichers (20).

6. Anlage nach einem der vorhergehenden Ansprüche 1 bis 5,
dadurch gekennzeichnet,
daß als Zeitdatengeber (24, 25) Funkuhren dienen.

## Claims

1. System for safeguarding vehicles or components built into vehicles, having an input unit (3) for code words, having a data transmission station (4) which can be switched on by the input unit and comprises a transmitter (5) which transmits at a prescribed frequency, and having on the vehicle side a receiver (14) for release commands which is connected to an unlocking circuit (15) for the starter (16) of the vehicle or of the on-off switch (17) of the components, characterized in that the transmitter transmits the input code word at a fixed, prescribed frequency differing from the transmission frequency of the transmitters of other vehicles, and the transmitted code word can be received by means of a central receiver (7), which can be tuned to all vehicle transmitters, in a control centre (2) which is installed outside the vehicle and not attached to the vehicle, in that the control centre comprises a test station (9) in which the code word received by the vehicle is compared with a code word which can be called in a code memory (10) upon reception of the frequency assigned thereto, and in that in the case of correspondence of the code words the test station outputs an unlocking command to a central transmitter (11) in the control centre for the purpose of transmission to the receiver for release commands, which is on the vehicle side and tuned to the central transmitter.

2. System for safeguarding vehicles or components built into vehicles, having an input unit (3) for code words, having a data transmission station (4) which can be switched on by the input unit and comprises a transmitter (5) which transmits at a prescribed frequency, and having on the vehicle side a receiver (14) for release commands which is connected to an unlocking circuit (15) for the starter (16) of the vehicle or of the on-off switch (17) of the components, characterized in that the transmitter transmits the input code word together with the vehicle identification at a fixed, prescribed frequency identical for all vehicles and the vehicle identification transmitted together with the code word can be received by means of a central receiver (7) in a control centre (2) which is installed outside the vehicle and not attached to the vehicle, and in that the control centre comprises a test station (9) in which the code word received with the vehicle identification is compared with a code word which can be called in a code memory upon reception of the vehicle identification assigned thereto, and in that in the case of correspondence of the code words the test station outputs an unlocking command to a central transmitter (11) in the control centre for the purpose of transmission to the receiver for release commands, which is on the vehicle side and tuned to the control transmitter.

3. System according to Claim 1 or 2, characterized by a locator (19) which is coupled to the input unit (3) and whose location data can automatically be added to the code word, and by a display (22), controlled by the test station (9), for the location data in the control centre.

4. System according to Claim 1, 2 or 3, characterized by a buffer (20), connected to the input unit, for a code word, and by a computer (21) in the unlocking circuit (15), which is connected to the output of the buffer (20) and the output of the receiver (14) on the vehicle side.

5. System according to one of the preceding Claims 1 to 4, characterized by a first time data transmitter (24) and a computer (23) connected thereto for modifying the release command before its input into the central transmitter (11), and by a time data transmitter (25), connected to the computer (21) in the unlocking unit (15), for modifying the content of the buffer (20).

6. System according to one of the preceding Claims 1 to 5, characterized in that radio clocks serve as the time data transmitters (24, 25).

## Revendications

1. Installation pour protéger contre le vol des véhicules ou des composants intégrés au véhicule avec une unité d'entrée (3) pour les mots de code, un poste de transmission de données (4) mis en oeuvre par l'unité d'entrée, ce poste comprenant un émetteur (5) émettant suivant une fréquence prédéterminée et un récepteur (14) embarqué dans le véhicule pour les ordres de libération, ce récepteur étant relié à un circuit de déverrouillage (15) pour le démarreur (16) du véhicule ou le commutateur (17) du composant, caractérisée en ce que l'émetteur du mot de code introduit travaille à une fréquence d'émission, fixe, prédéterminée, différente d'un véhicule à l'autre et le mot de code émis qui peut être reçu par un récepteur central (7) accordé sur tous les émetteurs des véhicules dans une centrale (2) non liée aux véhicules, située à l'extérieur des véhicules, la centrale comporte un poste de contrôle (9) qui compare le mot de code reçu du véhicule à un mot de code appelé dans une mémoire de code (10) à la réception de la fréquence et lorsque le mot de code correspond, le poste de contrôle émet un ordre de déverrouillage à un émetteur central (11) dans la centrale pour transmettre vers le véhicule un ordre de libération pour le récepteur du véhicule accordé sur l'émetteur central.

2. Installation de protection contre le vol de véhicules ou de composants intégrés à des véhicules avec une unité d'entrée (3) pour des mots de code, un poste de transmission (4), branché par l'unité d'entrée, comprenant un émetteur (5) émettant à une fréquence prédéterminée et un récepteur (14) embarqué dans le véhicule pour les ordres de libération qui est relié à un circuit de verrouillage (15) du démarreur (16) du véhicule ou du commutateur (17) des composants, caractérisée en ce que l'émetteur émet le mot de code introduit ainsi que le numéro minéralogique du véhicule à une fréquence fixe prédéterminée, identique pour tous les véhicules et le numéro minéralogique du véhicule émis en même temps que le mot de code est reçu par un récepteur central (7) dans une centrale (2) extérieure aux véhicules, non liée aux véhicules, et la centrale comprend un poste de contrôle (9) qui compare le mot de code reçu en même temps que le numéro du véhicule à un mot de code appelé à la réception du numéro du véhicule dans une mémoire de code et en cas de coïncidence du mot de code le poste de contrôle émet un ordre de déverrouillage à un émetteur central (11) de la centrale pour transmettre l'ordre de libération au récepteur du véhicule accordé sur l'émetteur central.

3. Installation selon la revendication 1 ou 2, caractérisée par un appareil de localisation (19) couplé à l'unité d'entrée (3) dont l'information concernant le lieu est ajoutée automatiquement au mot de code et est affichée par le moyen d'affichage (22) commandé par le poste de contrôle (9) pour indiquer le lieu.

4. Installation selon les revendications 1, 2 ou 3, caractérisée par une mémoire intermédiaire (20) du mot de code reliée à l'unité d'entrée et un calculateur (21) du circuit de déverrouillage (15) relié à la sortie de la mémoire intermédiaire (20) et à la sortie du récepteur (14) du véhicule.

5. Installation selon l'une des revendications précédentes 1 à 4, caractérisée par une première horloge (24) et un calculateur (23) relié à celle-ci pour modifier l'ordre de libération avant son envoi à l'émetteur central (11) et une horloge (25) reliée au calculateur (21) de l'unité de déverrouillage (15) pour modifier le contenu de la mémoire (20).

6. Installation selon l'une des revendications précédentes 1-15, caractérisée en ce que les horloges (24, 25) sont des horloges radio.
